# EUROPEAN PATENT APPLICATION

(11) **EP 1 589 731 A1**
(43) Date of publication of application: **26.10.2005**
(21) Application number: 04425284.9
(22) Date of filing: 23.04.2004
(51) Int. Cl.: H04M 1/60, H04B 1/38, H04Q 7/32

(54) **General-purpose device for controlling on-vehicle functions**

(71) Applicant: C.R.F. Società Consortile per Azioni, 10043 Orbassano (TO) (IT)
(72) Inventor: Burzio,Gianfranco.c/o.C.R.F.Societa Con.per Azioni, 10043 Orbassano (IT)
(74) Representative: Jorio, Paolo

(57) **Abstract**

A general-purpose device for controlling functions on a vehicle comprising: a number of on-vehicle control devices (3) by which commands are entered by the driver or passengers of the vehicle; an interface device (5) for recognizing the entered commands; a removable personal device (7) for performing a number of operating functions, and having display means (8); and a wireless connection (11) for connecting the interface device (5) and the personal device (7), so as to transfer the entered commands to the personal device (7). The personal device (7) responds to the incoming commands to activate operating functions provided in the personal device (7).

## Description

The present invention relates to a general-purpose device for controlling on-vehicle functions.

As is known, modern vehicles are equipped with a number of electronic devices for performing various operating functions, e.g. cellular telephone, satellite navigation system, MP3 audio file reader, compact disk reader, etc.

Electronic devices of this sort are operated by the driver and/or passenger of the vehicle by means of commands entered manually using control devices - usually pushbuttons, switches, knobs - located on the electronic device itself and/or on the instrument panel and/or on the steering wheel of the vehicle.

For example, control of the compact disk reader or radio (volume adjustment, channel and piece selection) and/or of the cellular telephone (call start/end) is known to be effected using switches on the steering wheel.

It is an object of the present invention to provide a device by which existing on-vehicle control devices can be used to control various operating functions, even functions for which the vehicle was not initially designed.

Wireless devices, in fact, such as telephones, palm-tops, personal computers, etc., are available, and which can be controlled externally by means of specially designed devices.

According to the present invention, there is provided a general-purpose device for controlling functions on a vehicle, characterized by comprising: a number of on-vehicle control devices by which commands are entered by the driver of the vehicle; interface means for recognizing the commands entered by means of said control devices; at least one removable personal device for performing a number of operating functions, and having display means; and a wireless connection for connecting said interface means and said personal device, so as to transfer the entered commands to the personal device; said personal device responding to the incoming commands to activate operating functions provided in the personal device.

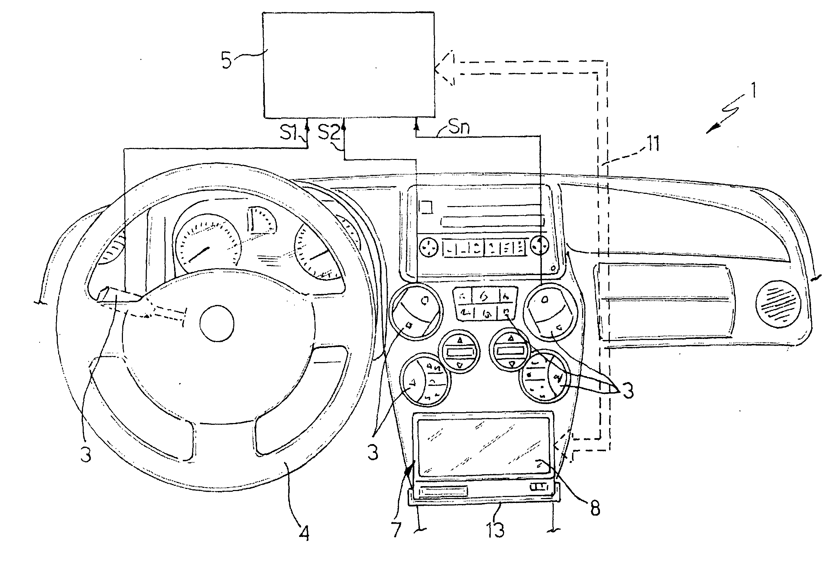

The invention will now be described with reference to the accompanying drawing showing a non-limiting embodiment.

Number 1 in the accompanying drawing indicates as a whole a general-purpose device for controlling on-vehicle functions in accordance with the teachings of the present invention.

Device 1 comprises:
- a number of on-vehicle control devices 3 (e.g. knobs, pushbuttons, levers, etc.) ergonomically located in the usual way (e.g. on the vehicle steering wheel 4) and by which commands are entered by the driver of the vehicle (not shown).
- an interface device 5 for recognizing the commands S1, S2 , ..., Sn entered by means of devices 3;
- at least one removable personal device 7 having a display (e.g. LCD display) 8;
- a wireless connection 11 (preferably a Bluetooth™ wireless connection) for connecting interface device 5 and personal device 7, so as to transfer the commands entered by the driver or passengers to personal device 7.

Personal device 7 responds to the incoming commands to activate various operating functions provided in personal device 7. If a number of personal devices are provided, at least one of them has a display 8.

The operating functions performed by personal device 7 include:
- cellular telephone;
- satellite navigation system;
- MP3 audio file reader;
- compact disk reader; and
- radio.

These functions may also be performed by a number of devices interconnected by the Bluetooth™ wireless connection, and of which one performs the display function (device 7), while the others provide operating resources (e.g. telephone, satellite location, music file, etc.).

The result is an intelligent control unit for controlling various operating functions using the normal on-vehicle control devices to control the various operating functions provided in personal device 7 and any other accessory personal devices.

Personal device 7 incorporates software defining a number of coded instructions permitting operation between personal device 7 and interface device 5. The software may obviously be modified so that personal device 7 can be used on different vehicles equipped with interface devices 5 with different technical characteristics.

Personal device 7 is fitted to a supporting device 13, which provides for mechanical support of the device, as well as for electrical connection to power and charge the device. The electrical connection may also be made indirectly, e.g. using a special battery which is charged by magnetic charge fields radiating from the support.

One of the advantages of the present invention is that of enabling various functions, such as telecommunication, entertainment, information, e-mail or message communication, etc., to be controlled using ergonomic, standard-layout, on-vehicle controls the user is already familiar with.

Moreover, the driver may use and control the functions of the personal device using normal, easily accessible, on-vehicle controls, thus avoiding the use of non-ergonomic/hard-to-reach controls, which may be impossible to use when driving and/or may only be used at the risk of seriously distracting the driver's attention from the road.

Moreover, the various personal devices may eventually be replaced and upgraded, while still being controlled by on-vehicle controls, which, in the absence of personal devices, may still be used for controlling other on-vehicle devices, e.g. a radio, in the normal way.

Voice control may also be provided, comprising a user interface communicating with interface 5 and which recognizes the driver's voice to generate and transmit commands to personal device 7.

Given the highly sophisticated nature of voice recognition technology, one embodiment of the system may provide for the function residing in one of the personal devices. In which case, the user interface simply provides for voice recording and amplification using the usual devices: microphone, amplifier and loudspeakers, microphone audio return filter. In this way, it is possible to keep pace with developments in voice recognition technology using different personal devices and the same user interface.

Strategies may also be implemented in device 7 to restrict and/or prevent use of device 7 in substantially dangerous driving situations, e.g. at high speed.

In which case, device 5 may inform device 7 over wireless connection 11 of a potentially hazardous driving situation.

Finally, it is clear that modifications and variations may be made to the general-purpose device for controlling functions on a vehicle described and illustrated therein, without departing from the scope of the present invention, as defined in the appended claims.

## Claims

1. A general-purpose device for controlling functions on a vehicle, **characterized by** comprising:
- at least one on-vehicle control device (3) by which commands are entered by the driver or passengers of the vehicle;
- interface means (5) for recognizing the commands entered by means of said control device (3);
- at least one removable personal device (7) for performing a number of operating functions, and having display means (8); and
- a wireless connection (11) for connecting said interface means (5) and said personal device (7), so as to transfer the entered commands to the personal device (7); said personal device (7) responding to the incoming commands to activate operating functions provided in the personal device (7).

2. A device as claimed in Claim 1, wherein said control device (3) is located on the steering wheel (4) of said vehicle.

3. A device as claimed in Claim 1, wherein said wireless connection (11) is formed using Bluetooth™ technology.

4. A device as claimed in any one of the foregoing Claims, wherein said personal device (7) performs at least one of the following operating functions:
- cellular telephone;
- satellite navigation system;
- radio;
- MP3 audio file reader; and
- compact disk reader.

5. A device as claimed in Claim 1, wherein said personal device (7) incorporates a number of coded instructions permitting operation of said personal device (7) with said interface means (5).

6. A device as claimed in Claim 1, wherein said control device (3) comprises at least one user interface communicating with said interface means (5) to recognize the driver's voice and generate and transmit commands to said personal device (7).
